# DEMANDE DE BREVET EUROPEEN

(11) **EP 3 789 098 A1**
(43) Date de publication de la demande: **10.03.2021**
(21) Numéro de dépôt: 20190847.2
(22) Date de dépôt: 13.08.2020
(51) Int. Cl.: B01D 17/02, B01D 17/12

(54) **SYSTÈME DE COLLECTE DE PARTICULES SOLIDES S'ACCUMULANT AU FOND D'UNE STATION SOUS-MARINE DE SÉPARATION HUILE/EAU**

(30) Priorité: 06.09.2019 FR 1909829
(71) Demandeur: SAIPEM S.A., 78180 Montigny Le Bretonneux (FR)
(72) Inventeur: CAPELA MORAES, Carlos Alberto, 92210 SAINT-CLOUD (FR); BANINI SHAIEK, Sadia, 92400 COURBEVOIE (FR)
(74) Mandataire: Cabinet Beau de Loménie

(57) **Abrégé**

L'invention concerne un système de collecte de particules solides s'accumulant au fond d'une station sous-marine de séparation huile/eau (12) d'une installation d'élimination sous-marine de l'eau produite lors de la production sous-marine d'hydrocarbures par grandes profondeurs, comprenant au moins un canal de drainage vertical (22) destiné à déboucher à l'intérieur d'une partie basse d'un corps horizontal (14) de la station de séparation huile/eau, une conduite d'évacuation (20) destinée à être positionnée horizontalement sous ledit corps horizontal de la station de séparation huile/eau et dans laquelle débouche le canal de drainage, et un éjecteur de boue liquide à haute-pression (28) ayant un orifice d'aspiration (26) raccordé à la conduite d'évacuation (20) par l'intermédiaire d'une vanne d'alimentation.

## Description

### Domaine Technique

La présente invention se rapporte au domaine général de la production sous-marine par grandes profondeurs d'hydrocarbures, notamment de pétrole et de gaz. Elle concerne plus précisément l'évacuation des particules solides qui s'accumulent au cours de l'élimination de l'eau qui est produite pendant une telle production sous-marine d'hydrocarbures.

### Technique antérieure

Dans les configurations actuelles de production sous-marine d'hydrocarbures en eaux profondes, la configuration généralement retenue est celle de la connexion des puits de production sous-marins, directement ou par l'intermédiaire d'un collecteur sous-marin, à une usine de production flottante.

Cette usine est généralement constituée d'une unité flottante destinée à la production, au stockage et au déchargement de pétrole (dénommée en anglais FPSO pour « Floating production storage and offloading ») vers un pétrolier qui vient régulièrement s'amarrer à un emplacement fixe sur la surface de la mer, à proximité du champ de production sous-marin pour collecter l'huile produite.

Le FPSO, avec des installations de production primaires sur son pont, effectue habituellement la séparation et le traitement des fluides de production (gaz, huile et eau produite). Concernant ce dernier fluide, l'installation de traitement de surface classique est composée d'hydrocyclones de déshuilage, éventuellement complétés par une unité de dégazage et/ou de flottaison afin de permettre sa vidange en mer avec une teneur en huile réduite (habituellement inférieure à 30 ppm).

Il est également connu de recourir à des systèmes sous-marins de séparation et de traitement de l'eau produite à partir de champs de production d'hydrocarbures, en particulier dans des profondeurs importantes et pour des contenus en eau élevés de l'huile produite, l'eau produite étant généralement injectée dans un réservoir rocheux.

En effet, par opposition à une configuration de traitement de l'eau produite en surface, cette configuration sous-marine peut augmenter sensiblement la production d'huile en raison de la réduction de la pression en tête de puits par élimination de la colonne d'eau dans la colonne montante jusqu'à l'unité flottante de production (le FPSO).

La réduction de la pression en tête de puits grâce à l'élimination sous-marine de l'eau peut être significative et elle est plus grande pour des profondeurs d'eau plus importantes et des contenus en eau élevés de l'huile produite. Cette condition d'augmentation du contenu en eau de l'huile produite est très fréquente dans la plupart des champs de production de pétrole, en particulier pendant la dernière partie de la durée de l'exploitation, lorsque l'aquifère tend à atteindre les puits de production.

Toutefois, en permettant l'augmentation de la production due à la réduction de la pression à la tête du puits (ce qui entraîne une pression de soutirage plus importante au fond) au cours de la seconde moitié de la vie de la production du champ de pétrole, lorsque le contenu en eau de l'huile dépasse 50%, le débit total (eau produite et huile) des puits augmente et les forces de traînée autour du puits augmentent également, ce qui peut également entraîner une augmentation de la production de particules fines et solides provenant de la formation (sable, limon, argile, etc. - appelées ci-après sable).

En pratique, le flux issu des puits de production passe par un dessableur cyclonique multiphase en fonctionnement continu (de préférence ayant un revêtement en céramique) qui élimine la majeure partie de la charge de sable, y compris en cas d'augmentation soudaine de sable, de manière continue. Le flux de boue liquide à faible pression issu du dessableur multiphase est «pompé» par un éjecteur de boue liquide (ayant un revêtement interne en céramique afin d'augmenter la résistance à l'érosion), qui est entraîné par un écoulement moteur à l'eau à haute pression.

Toute augmentation soudaine de production de sable peut être géré par ce dessableur multiphase. De plus, une augmentation plus pérenne de la charge de sable, due par exemple à des problèmes de rétention du sable dans l'un des puits produisant vers une station sous-marine de séparation huile/eau à long ratio peut être compensée dans une certaine mesure en forçant une augmentation du débit de la boue liquide à rejeter, en augmentant le débit d'eau haute pression d'éjection grâce à une ouverture accrue de la vanne de contrôle.

Les effluents d'hydrocarbures, d'eau et de gaz issus du dessableur multiphase - sans la plupart des charges de sable, éliminés par ce dispositif - sont acheminés dans une station sous-marine de séparation huile/eau, par exemple dans un dispositif modulaire de séparation gravitaire liquide/liquide constitué d'une pluralité de tuyaux formant des boucles parallèles (appelées bobines) qui peuvent être installées sur le fond marin (séparateur appelé « SpoolSep » par le Demandeur).

Une partie des particules solides résiduelles, qui n'ont pas été éliminées par le dessableur multi-phase et continuent de se déplacer avec le liquide, peuvent éventuellement se déposer à l'intérieur des tuyaux de la station sous-marine de séparation huile/eau, en raison de la faible vitesse des fluides à l'intérieur de cet équipement, ce qui est requis pour une bonne séparation eau-huile.

La quantité de sable susceptible de se déposer à l'intérieur des tuyaux sera probablement très petite et sera probablement formée de particules de très petite taille, car le dessableur multi-phase en amont éliminera la plus grande partie de la charge de sable et les plus grosses particules. Cependant, la station de séparation huile/eau est supposée fonctionner pendant plusieurs années pendant la durée de l'exploitation sur le fond marin, et même de petites quantités de minuscules particules solides peuvent former une couche significative au fond des tuyaux, si elles ne sont pas retirées périodiquement.

Pour résoudre ce problème, il est connu de recourir à des systèmes de collecte du sable accumulé au fond des tuyaux de la station de séparation huile/eau. On pourra par exemple se référer au document US 9,359,878 qui décrit le recours à des pièges à sable qui sont placés tout le long des tuyaux de la station de séparation huile/eau pour collecter de manière périodique le sable accumulé au fond de ces tuyaux. Cependant, le système de collecte décrit dans ce document présente plusieurs inconvénients, notamment de multiplier les pièges à sable et les dispositifs d'évacuation centrifuges associés et d'être relativement complexe de mise en œuvre.

### Exposé de l'invention

L'invention a donc pour but principal de proposer un système de collecte de particules solides s'accumulant au fond d'une station sous-marine de séparation huile/eau qui ne présente pas les inconvénients précités.

Conformément à l'invention, ce but est atteint grâce à un système de collecte de particules solides s'accumulant au fond d'une station sous-marine de séparation huile/eau d'une installation d'élimination sous-marine de l'eau produite lors de la production sous-marine d'hydrocarbures par grandes profondeurs, comprenant au moins un canal de drainage vertical destiné à déboucher à l'intérieur d'une partie basse d'un corps horizontal de la station de séparation huile/eau, une conduite d'évacuation destinée à être positionnée horizontalement sous ledit corps horizontal de la station de séparation huile/eau et dans laquelle débouche le canal de drainage, et un éjecteur de boue liquide à haute-pression ayant un orifice d'aspiration raccordé à la conduite d'évacuation par l'intermédiaire d'une vanne d'alimentation.

Le système de collecte selon l'invention est remarquable en ce qu'il présente un réseau passif de tuyauteries connecté à un éjecteur de boue liquide à haute-pression, ce qui permet l'élimination continue et périodique du sable accumulé dans au fond du corps de la station de séparation huile/eau. En particulier, le système de collecte selon l'invention est de conception et d'entretien simplifiés et d'une grande fiabilité à l'abri notamment des défaillances. De plus, le système de collecte selon l'invention permet de nettoyer chaque tuyau du corps de la station de séparation huile/eau de façon indépendante en éliminant les dépôts accumulés, ce qui permet d'éviter de rendre la station de séparation huile/eau totalement inopérante pendant ce nettoyage.

De plus, cette configuration de rejet par aspiration via un éjecteur de boue liquide dédié augmente la flexibilité du système de collecte en ce qui concerne le débit de rejet (par activation du débit moteur), ce qui améliore encore la flexibilité de cette configuration de retrait de sable en continu, dans le cas d'une production de sable anormale provenant des puits.

Même si du sable résiduel est déposé à l'intérieur du corps de la station de séparation huile/eau, le fonctionnement régulier du système de collecte selon l'invention garantira une gestion appropriée du lit de sable éventuellement formé à l'intérieur de la station de séparation huile/eau. Ce système de collecte, sans pièces mobiles ni composants internes, est extrêmement fiable et, si son fonctionnement est correct, il doit être utilisé périodiquement pour éviter les boues à haute concentration. De plus, la seule vanne utilisée pour permettre cette opération est actionnée à distance depuis le FPSO. La fréquence de fonctionnement est faible (généralement une fois par semaine ou même moins), ce qui n'est pas un problème, de plus, un raccordement de la tuyauterie de rinçage en amont de cette vanne peut éviter la présence de sable près de la vanne juste avant sa fermeture, après une opération de rinçage.

Le corps de la station sous-marine de séparation huile/eau peut être cylindrique et comprendre dans sa partie basse une pluralité de trous espacés longitudinalement les uns des autres et débouchant chacun dans un canal de drainage. Dans ce cas, les trous formés dans la partie basse du corps de la station sous-marine de séparation huile/eau sont de préférence alignés selon un axe longitudinal tangent à la forme cylindrique du corps.

Dans un autre mode de réalisation, le corps de la station sous-marine de séparation huile/eau est cylindrique et comprend dans sa partie basse une fente longitudinale continue débouchant dans un canal de drainage formé par deux plaques parallèles. Dans ce cas, le canal de drainage comprend avantageusement une pluralité d'entretoises reliant les deux plaques entre elles afin de rigidifier le corps de la station sous-marine et le canal de drainage.

De préférence, la conduite d'évacuation présente un diamètre supérieur au diamètre du canal de drainage.

L'orifice d'aspiration de l'éjecteur de boue liquide peut être raccordé à une extrémité longitudinale aval de la conduite d'évacuation.

De préférence également, la conduite d'évacuation est raccordée à une extrémité longitudinale à une ligne d'eau à haute-pression afin de permettre un rinçage à l'eau de la conduite d'évacuation.

L'invention a également pour objet une installation d'élimination sous-marine de l'eau produite lors de la production sous-marine d'hydrocarbures par grandes profondeurs, comprenant un dessableur alimenté en continu en fluides provenant directement d'au moins un puits de production d'hydrocarbures, une station sous-marine de séparation huile/eau alimentée en fluides provenant du dessableur, et un système de collecte de particules solides s'accumulant au fond de la station de séparation huile/eau tel que défini précédemment.

De préférence, la station de séparation huile/eau est un dispositif modulaire de séparation gravitaire liquide/liquide dont le corps est constitué d'une pluralité de tuyaux formant des boucles parallèles, le système de collecte de particules solides comprenant une conduite d'évacuation positionnée horizontalement sous chaque tuyau du corps de la station de séparation huile/eau et un éjecteur de boue liquide à haute-pression commun à l'ensemble des conduites d'évacuation.

L'invention a encore pour objet un procédé de pilotage de l'installation telle que définie ci-dessus, dans lequel le dessableur, la station de séparation huile/eau, et le système de collecte de particules solides sont mis en fonctionnement continu, la vanne d'alimentation de l'éjecteur de boue liquide à haute-pression étant périodiquement ouverte pour permettre un nettoyage des dépôts de particules solides dans la conduite d'évacuation du système de collecte de particules solides.

### Brève description des dessins

[Fig. 1] La figure 1 représente de façon schématique et partielle une installation d'élimination sous-marine de l'eau produite selon un mode de réalisation de l'invention.
[Fig. 2] La figure 2 est une vue d'un système de collecte équipant l'installation de la figure 1.

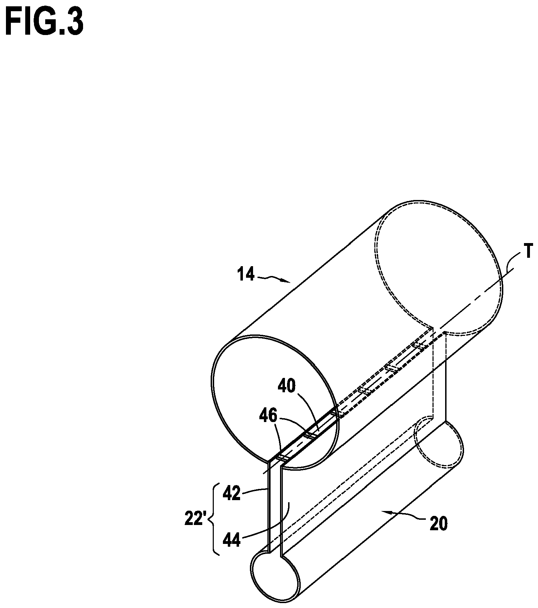

[Fig. 3] La figure 3 montre un système de collecte selon un autre mode de réalisation de l'invention.

### Description des modes de réalisation

L'invention s'applique à la production et au traitement sous-marin d'hydrocarbures, notamment de pétrole et de gaz, par grandes profondeurs (c'est-à-dire supérieures à 700 mètres) à partir de champs de pétrole qui présentent une augmentation croissante de la production de contenu en eau. Elle concerne plus précisément la collecte (ou l'élimination) des particules solides accumulées dans la station de séparation huile/eau de l'installation d'élimination sous-marine de l'eau produite.

L'augmentation du contenu en eau de l'huile produite est devenue très fréquente dans la plupart des champs de production de pétrole, en particulier pendant la dernière partie de la durée d'exploitation, lorsque l'aquifère tend à atteindre les puits de production.

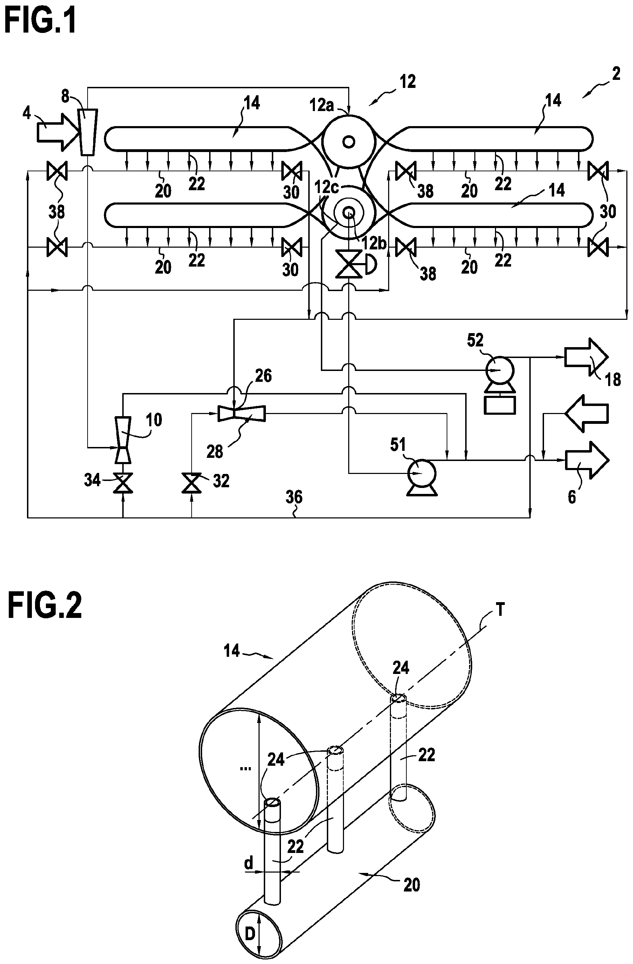

La figure 1 représente un exemple d'installation de production sous-marine d'hydrocarbures 2 par grandes profondeurs à partir d'un champ de production de pétrole 4.

Typiquement, un champ de production de pétrole en mer profonde est exploité à une profondeur d'eau comprise entre 1000m et 3000m. Il se compose d'une pluralité de puits de production d'hydrocarbures destinés à collecter le pétrole et le gaz provenant d'un réservoir de pétrole dans la roche-réservoir.

Les hydrocarbures extraits sont typiquement envoyés vers une unité de production 6 en surface, par exemple une unité flottante destinée à la production, au stockage et au déchargement de pétrole (dénommée en anglais FPSO pour « Floating production storage and offloading »), par l'intermédiaire de conduites sous-marines et de colonnes montantes (non représentées).

Avant de remonter vers l'unité de production 6, les hydrocarbures extraits du réservoir de pétrole sont traités au niveau du fond marin pour notamment séparer l'huile produite de l'eau contenue dans celle-ci et éliminer les particules fines et solides provenant de la roche-réservoir (sable, limon, argile, etc. - appelées ci-après sable).

A cet effet, l'installation de production sous-marine d'hydrocarbures 2 comprend notamment un dessableur 8 qui est alimenté en fluides provenant des puits de production d'hydrocarbures 4. Par exemple, le dessableur est un dessableur cyclonique multiphase (de préférence ayant un revêtement en céramique) qui fonctionne en continu afin d'éliminer la majeur partie de la charge de sable, y compris en cas d'augmentation soudaine de sable.

Le flux de boue liquide à faible pression issu du dessableur 8 est aspiré de manière continue par un éjecteur de boue liquide 10 (ayant de préférence un revêtement interne en céramique afin d'augmenter la résistance à l'érosion), qui est entraîné par un écoulement moteur à l'eau à haute pression piloté par la vanne d'alimentation (tout ou rien) 34. Le flux de boue liquide est alors envoyé vers l'unité de production 6 pour être traité.

Les effluents d'hydrocarbures, d'eau et de gaz issus du dessableur 8 (sans la plupart des charges de sable, éliminés par ce dispositif) sont acheminés dans une station sous-marine de séparation huile/eau 12.

Différents types de station sous-marine de séparation huile/eau peuvent être utilisées. Dans l'exemple de réalisation de la figure 1, on pourra en particulier utiliser un dispositif modulaire de séparation gravitaire liquide/liquide dont le corps est constitué d'une pluralité de tuyaux 14 de forme cylindrique, sans éléments internes et formant des boucles parallèles (appelées bobines, au nombre de quatre sur l'exemple de la figure 1) qui peuvent être installés sur le fond marin du fait que leur diamètre réduit fournit une résistance élevée à la pression différentielle externe/interne.

Un exemple d'un tel dispositif modulaire de séparation gravitaire liquide/liquide (appelé « SpoolSep») est décrit dans la publication WO 2011/161343 au nom de la Demanderesse. La longueur élevée et la section transversale circulaire des tuyaux de ce dispositif de séparation permettent d'obtenir une résistance à la pression différentielle élevée dans une configuration de poids relativement faible. En outre, sa configuration modulaire permet des conditions d'installation flexibles, même pour des systèmes à haute capacité (débit d'entrée élevé). Ainsi, ce dispositif permet la séparation primaire d'eau brute en vrac à n'importe quelle pression souhaitée, en particulier à une pression faible, indépendamment de la pression environnante (profondeur de l'eau).

Comme représenté sur la figure 1, cette station sous-marine de séparation huile/eau 12 comprend également une entrée en hydrocarbures 12a, une sortie en huile et gaz 12b qui est reliée à l'unité de production 6 en surface par l'intermédiaire d'une colonne montante au moyen d'une pompe 51, et une sortie en eau 12c qui est par exemple destinée à être reliée par l'intermédiaire d'une pompe haute-pression 52 à un réservoir de préférence plat de séparation huile/eau par gravité 18 reposant sur le fond marin.

Une partie des particules solides résiduelles qui n'ont pas été éliminées par le dessableur 8 et qui continuent de se déplacer avec le liquide, peuvent éventuellement se déposer à l'intérieur des conduites, en raison de la faible vitesse des fluides à l'intérieur de cet équipement, ce qui est requis pour une bonne séparation eau-huile.

A cet effet, conformément à l'invention, il est prévu d'installer un système de collecte des particules solides s'accumulant au fond de la station de séparation huile/eau.

Plus précisément, une conduite d'évacuation 20 est positionnée horizontalement sous le corps de la station de séparation huile/eau 12. Dans l'exemple d'une station de séparation huile/eau du type de celle illustrée sur la figure 1, une conduite d'évacuation 20 est positionnée sous chaque tuyau 14 formant les boucles parallèles.

Pour chaque conduite d'évacuation 20, le système de collecte selon l'invention comprend également une pluralité de canaux de drainage verticaux 22 qui sont destinés chacun à déboucher à l'intérieur d'une partie basse des tuyaux 14 de la station de séparation huile/eau et à s'ouvrir dans la conduite d'évacuation.

Comme représenté plus précisément sur la figure 2, l'axe longitudinal inférieur T qui est tangent au corps cylindrique des tuyaux 14 de la station de séparation huile/eau présente une pluralité de trous 24 qui sont espacés longitudinalement les uns des autres et qui débouchent chacun dans un canal de drainage 22.

Les canaux de drainage 22 (et les trous 24) présentent un diamètre d qui dépend du diamètre du tuyau 14 de la station de séparation huile/eau, et qui est dimensionné pour drainer la boue liquide à faible vitesse. Typiquement, ce diamètre d est de l'ordre de 2 à 8 mm environ.

Les canaux de drainage 22 sont dépourvus d'éléments internes et disjoncteurs de vortex sur le dessus, c'est-à-dire des morceaux de tuyaux verticaux de petit diamètre, s'ouvrant au bas des tuyaux 14. Cette configuration vise à éviter tout dispositif pouvant être bouché par la boue liquide.

La distance entre les trous 24 au bas des tuyaux 14 de la station de séparation huile/eau, c'est-à-dire la distance entre deux canaux de drainage 22 consécutifs est variable et calculée (par logiciel d'analyse dynamique des fluides) en fonction des conditions réelles d'un scénario particulier afin de limiter la hauteur maximale de la couche de sable au bas du tuyau. Typiquement, cette distance est d'environ 1 m. Chaque canal de drainage 22 qui quitte le tuyau 14 de la station de séparation huile/eau descend dans une même conduite d'évacuation horizontale 20 (ayant un diamètre D plus grand que celui des canaux de drainage - généralement de l'ordre de 5 à 10 cm de diamètre).

De plus, comme représenté sur la figure 1, l'extrémité avale de chaque conduite d'évacuation horizontale 20 est raccordée à l'orifice d'aspiration 26 d'un éjecteur de boue liquide à haute-pression 28 par l'intermédiaire d'une vanne d'alimentation 30 (de type tout ou rien).

Afin de favoriser le nettoyage périodique des dépôts de sable au fond des tuyaux 14 de la station de séparation huile/eau, chacun d'entre eux peut avoir une vanne d'alimentation 30 correspondante ouverte à la fois et la boue au fond de ce tuyau est aspirée par plusieurs canaux verticaux de drainage 22 connectés à la conduite d'évacuation 20 correspondante.

Le contrôle de la vitesse d'aspiration se fait par l'injection d'eau à haute pression dans l'éjecteur de boue liquide 28 via le réglage de l'ouverture d'une vanne de régulation modulante 32 (ou par le réglage d'un étranglement réglable par palier). Cette opération permet l'aspiration d'une partie du liquide du tuyau 14 de la station de séparation huile/eau de manière contrôlée afin d'éviter la formation de tourbillons de drainage à l'intérieur du tuyau pour ne pas perturber son fonctionnement.

Cette élimination de l'eau au fond des tuyaux de la station de séparation huile/eau transportera des particules solides (sable, limon, etc.) qui finiront par se déposer au fond des conduites d'évacuation. Même si une petite quantité de particules solides reste au fond des tuyaux après l'opération d'aspiration, entre deux trous 24 voisins au bas du tuyau, la hauteur de cette couche de sable est limitée car la prochaine période d'aspiration entraînera les particules du haut à tomber, qui seront remplacées par de nouvelles.

Ainsi, ce processus répété évite toute compaction éventuelle de la couche de particules en forçant périodiquement son dégagement à travers les canaux verticaux de drainage. Aucune augmentation de la couche de sable résiduelle n'est attendue, la dynamique des fluides à l'intérieur du corps de la station de séparation huile/eau pendant le rinçage étant conçue pour éviter ce phénomène, selon une conception appropriée du système de collecte.

Le diamètre d canaux verticaux de drainage 22 peut éventuellement varier en fonction de sa distance à l'éjecteur de boue liquide 28. Cette configuration optimisée peut être déterminée lors de la conception, en tenant compte des données de scénario spécifiques, et sera établie afin d'obtenir une aspiration appropriée à travers les différents canaux verticaux de drainage.

Alternativement, une étude par un logiciel d'analyse dynamique des fluides peut montrer que, pour un scénario spécifique (données concernant la distribution granulométrique des particules solides), les particules solides ayant également une taille de distribution sélective ne peuvent se déposer qu'à une certaine longueur à partir de l'entrée des tuyaux de la station de séparation huile/eau (les plus grosses particules solides restant près de l'entrée). Ceci est probable dans une distribution granulométrique de taille largement dispersée. Dans ce cas, le système de collecte selon l'invention peut être doté d'une configuration de diamètre de la conduite d'évacuation non uniforme, afin d'optimiser l'élimination du sable le long de la des tuyaux de la station de séparation huile/eau.

Par ailleurs, un raccordement de la ligne d'eau à haute pression 36 (utilisée pour alimenter l'éjecteur de boue liquide à haute-pression 28, voir figure 1) peut également être connecté (par l'intermédiaire d'une vanne 38) à chacune des extrémités en amont des conduites d'évacuation horizontales 20 du système de collecte ou immédiatement en amont de la vanne d'alimentation 30 correspondante, afin de permettre le rinçage des conduites d'évacuation. Ceci présente l'avantage d'une grande flexibilité de fonctionnement, en cas de mauvais fonctionnement du système, ou pour éviter l'absence de particules solides résiduelles au niveau de l'alésage de la vanne d'alimentation.

Ce rinçage à l'eau à haute pression pourrait être effectué lors de la procédure finale d'aspiration du bas des tuyaux de la station de séparation huile/eau, afin d'éviter l'accumulation de sable en amont de la vanne d'alimentation 30 correspondante. Il convient de noter que lors de ce rinçage à l'eau à haute pression, une augmentation du débit d'eau est fournie à l'intérieur de la conduite d'évacuation horizontale pendant la procédure de rinçage, facilitant ainsi le drainage de la boue liquide. En fonctionnement normal, la couche de sable déposée attendue est très réduite et la procédure de rinçage des conduites doit être suffisamment fréquente pour ne générer que des boues liquides à faible concentration et éviter toute augmentation de hauteur et le compactage de la couche déposée, de sorte qu'aucun blocage du réseau de tuyauterie de rinçage ne soit possible si un tel fonctionnement de ce système est effectué.

La figure 4 représente un autre mode de réalisation du système de collecte selon l'invention.

Ce mode de réalisation se distingue de celui décrit précédemment notamment en ce que chaque tuyau 14 de la station de séparation huile/eau comprend dans sa partie basse une fente longitudinale continue 40 qui débouche dans un canal de drainage vertical 22' formé par deux plaques parallèles 42, 44, ce canal de drainage débouchant dans une conduite d'aspiration 20.

Avec ce mode de réalisation, il est pratiquement impossible d'avoir une couche de sable en croissance au bas du corps de la station de séparation huile/eau.

Par ailleurs, afin de rigidifier le canal de drainage 22' et de diminuer ainsi l'épaisseur des plaques 42, 44, le canal de drainage comprend une pluralité d'entretoises 46 reliant les deux plaques entre elles.

La procédure de collecte des particules solides doit être répétée pour chacun des tuyaux de la station de séparation huile/eau dans l'ordre. La durée de cette opération, ainsi que sa fréquence, seront déterminées opérationnellement en fonction de la quantité de particules solides présente au fond des tuyaux, ce qui devrait être très faible en raison du dessableur 8 opérant de manière continue en amont, comme cela a déjà été expliqué.

La détermination de la quantité de particules solides peut être effectuée à l'aide d'un système de surveillance (type sonar, par exemple) ou par un système de surveillance de lit de sable ou encore, directement évalué par l'opérateur par l'alignement du débit produit du système sous-marin sur une station de test de séparation située sur le FPSO (pour le temps de rinçage) afin de permettre l'évaluation de la quantité de particules solides. Une fois que la fréquence de l'opération est déterminée, elle peut être automatisée via le système de contrôle principal. Dans ce cas, des détecteurs acoustiques de particules solides doivent être installés dans le système de collecte afin de fournir des informations immédiates dans le cas de certaines arrivées brusques de particules solides (par ex. production de sable accidentelle). Sur la base de ces informations, l'équipe d'exploitation pourrait examiner la fréquence requise des opérations de rinçage afin d'optimiser le fonctionnement du système de collecte.

On notera que même si du sable résiduel est déposé à l'intérieur des tuyaux de la station de séparation huile/eau, le fonctionnement régulier du système de collecte selon l'invention garantira une gestion appropriée du lit de sable éventuellement formé à l'intérieur des tuyaux.

Ce système de collecte, sans pièces mobiles ni composants internes, est extrêmement fiable et, si son fonctionnement est correct, il est utilisé périodiquement pour éviter les boues à haute concentration. De plus, la seule vanne tout-ou-rien (une par conduite d'évacuation des boues) utilisée pour permettre cette opération est actionnée à distance depuis le FPSO. La fréquence de fonctionnement est faible (généralement une fois par semaine ou même moins), ce qui n'est pas un problème, de plus, un raccordement du système de collecte en amont de cette vanne peut éviter la présence de sable près de la vanne juste avant sa fermeture, après une opération de rinçage.

La flexibilité, la fiabilité et la robustesse accrues du système de collecte selon l'invention résultent de :
- La possibilité de gérer les venues intempestives et importantes de sable, ainsi qu'une augmentation permanente de la production de sable, en raison d'un problème localisé dans un des puits de production. Le dé-sableur a cette caractéristique de traiter les venues soudaines et importantes de sable et la possibilité d'augmenter le débit de rejet - par l'augmentation du débit d'eau de l'éjecteur aspirant - ce qui permet de traiter une augmentation permanente de la charge de sable.
- Conduites avec des tuyaux ouverts afin d'éliminer en douceur la couche de sable, à travers un flux de boue diluée et injecté en continu dans un pipeline multi-phase (dilué davantage avec la production) en utilisant un éjecteur de boue dédié - aucune pièce mobile ni aucun élément interne requis - pratiquement rien ne tombe en panne.
- Nombre limité de vannes d'alimentation tout ou rien requises (une par bobine de la station de séparation huile/eau).
- Possibilité de rincer ces vannes d'alimentation après chaque opération (en évitant tout résidu de sable immédiatement en amont / en aval des vannes).
- Aucune interruption de la séparation normale à l'intérieur des bobines de la station de séparation huile/eau, même pendant la procédure périodique d'élimination du sable des tuyaux.
- Possibilité de réguler le débit des excès d'eau produite rejetés par la procédure d'évacuation du sable, en modulant le temps requis pour la procédure d'aspiration, ce qui minimise l'impact sur les activités de production en surface.
- Aucun écoulement de boue du au sable dans les systèmes de pompage actifs, car les éjecteurs de boue liquide sont conçus pour envoyer les écoulements de boue en aval de la pompe multi-phase, directement dans le pipeline multi-phase.
- Solution économique basée uniquement sur des tuyaux, un nombre réduit de vannes d'alimentation tout ou rien et d'éléments passifs (éjecteurs de sable avec noyau en céramique résistant à l'érosion).

## Revendications

1. Système de collecte de particules solides s'accumulant au fond d'une station sous-marine de séparation huile/eau (12) d'une installation d'élimination sous-marine de l'eau (2) produite lors de la production sous-marine d'hydrocarbures par grandes profondeurs, comprenant au moins un canal de drainage vertical (22) destiné à déboucher à l'intérieur d'une partie basse d'un corps horizontal (14) de la station de séparation huile/eau, une conduite d'évacuation (20) destinée à être positionnée horizontalement sous ledit corps horizontal de la station de séparation huile/eau et dans laquelle débouche le canal de drainage (22), et un éjecteur de boue liquide à haute-pression (28) ayant un orifice d'aspiration (26) raccordé à la conduite d'évacuation (20) par l'intermédiaire d'une vanne d'alimentation (30).

2. Système selon la revendication 1, dans lequel le corps (14) de la station sous-marine de séparation huile/eau est cylindrique et comprend dans sa partie basse une pluralité de trous (24) espacés longitudinalement les uns des autres et débouchant chacun dans un canal de drainage (22).

3. Système selon la revendication 2, dans lequel les trous (24) formés dans la partie basse du corps de la station sous-marine de séparation huile/eau sont alignés selon un axe longitudinal (T) tangent à la forme cylindrique du corps.

4. Système selon la revendication 1, dans lequel le corps (20) de la station sous-marine de séparation huile/eau est cylindrique et comprend dans sa partie basse une fente longitudinale (40) continue débouchant dans un canal de drainage (22') formé par deux plaques parallèles (42, 44).

5. Système selon la revendication 4, dans lequel le canal de drainage (22') comprend une pluralité d'entretoises (46) reliant les deux plaques (42, 44) entre elles afin de rigidifier le canal de drainage.

6. Système selon l'une quelconque des revendications 1 à 5, dans lequel la conduite d'évacuation (20) présente un diamètre (D) supérieur au diamètre (d) du canal de drainage (22).

7. Système selon l'une quelconque des revendications 1 à 6, dans lequel l'orifice d'aspiration (26) de l'éjecteur de boue liquide (28) est raccordé à une extrémité longitudinale aval de la conduite d'évacuation.

8. Système selon l'une quelconque des revendications 1 à 7, dans lequel la conduite d'évacuation (20) est raccordée à une extrémité longitudinale à une ligne d'eau à haute-pression (36) afin de permettre un rinçage à l'eau de la conduite d'évacuation.

9. Installation d'élimination sous-marine de l'eau (2) produite lors de la production sous-marine d'hydrocarbures par grandes profondeurs, comprenant un dessableur (8) alimenté en continu en fluides provenant directement d'au moins un puits de production d'hydrocarbures (4), une station sous-marine de séparation huile/eau (12) alimentée en fluides provenant du dessableur, et un système de collecte de particules solides s'accumulant au fond de la station de séparation huile/eau selon l'une quelconque des revendications 1 à 8.

10. Installation selon la revendication 9, dans laquelle la station de séparation huile/eau est un dispositif modulaire de séparation gravitaire liquide/liquide dont le corps est constitué d'une pluralité de tuyaux (14) formant des boucles parallèles, le système de collecte de particules solides comprenant une conduite d'évacuation (20) positionnée horizontalement sous chaque tuyau du corps de la station de séparation huile/eau et un éjecteur de boue liquide à haute-pression (28) commun à l'ensemble des conduites d'évacuation.

11. Procédé de pilotage de l'installation selon l'une des revendications 9 et 10, dans lequel le dessableur, la station de séparation huile/eau, et le système de collecte de particules solides sont mis en fonctionnement continu, la vanne d'alimentation de l'éjecteur de boue liquide à haute-pression étant périodiquement ouverte pour permettre un nettoyage des dépôts de particules solides dans la conduite d'évacuation du système de collecte de particules solides. 1
